# FASCICULE DE BREVET EUROPEEN

(11) **EP 2 577 411 B1**
(45) Date de publication et mention de la délivrance du brevet: **28.12.2016**
(21) Numéro de dépôt: 11722444.4
(22) Date de dépôt: 31.05.2011
(51) Int. Cl.: G05B 13/02, G05B 15/02, E06B 9/68

(54) **PROCEDE DE REGLAGE DE LA VITESSE D'UN ACTIONNEUR ELECTRIQUE DE MISE EN MOUVEMENT D'UN ELEMENT DE FERMETURE, D'OCCULTATION OU DE PROTECTION SOLAIRE**
VERFAHREN ZUR GESCHWINDIGKEITSREGELUNG EINES ELEKTRISCHEN AKTORS ZUR BEWEGUNG EINES SCHLIESSELEMENTS, EINES BESCHATTUNGSELEMENTS ODER EINES SONNENSCHUTZELEMENTS
METHOD FOR CONTROLLING THE SPEED OF AN ELECTRIC ACTUATOR FOR MOVING A SHUTTER, AN OCCULTATION ELEMENT OR A SUNSCREEN ELEMENT

(30) Priorité: 01.06.2010 FR 1054264
(43) Date de publication de la demande: 10.04.2013
(73) Titulaire: Somfy SAS, 74300 Cluses (FR)
(72) Inventeur: CLEGUER, Anne-Sophie, F-74800 La Roche-sur-Foron (FR)
(74) Mandataire: Novaimo
(86) Numéro de dépôt international: PCT/EP2011/058906
(87) Numéro de publication internationale: WO 2011/151308

(56) Documents cités:
- DE-A1- 19 942 512
- FR-A1- 2 919 892
- FR-A1- 2 931 262
- GB-A- 2 255 421
- US-A- 5 467 808
- US-A1- 2006 232 234
- US-B1- 6 497 267

## Description

L'invention concerne le domaine de la commande d'équipements domotiques motorisés tels des volets roulants et/ou portes enroulables dans un bâtiment.

Il est connu du brevet EP 1 083 291 de permettre un réglage de vitesse d'un moteur de volet roulant ou similaire, par diminution sélective de sa vitesse en dessous de la vitesse maximum, afin de réduire le bruit de manoeuvre. Des moyens d'ajustement et/ou de commande sont ainsi mis à la disposition de l'utilisateur. Le problème résolu par ce document est celui de l'adaptation de la puissance du moteur aux conditions d'installation. Ainsi, un moteur de volet roulant est conçu, selon ce document, de manière à pouvoir entraîner une charge maximale, par exemple un volet roulant très large et réalisé avec des matériaux lourds, par exemple en bois ou en acier. Ce même moteur peut être utilisé pour motoriser un volet beaucoup plus petit, léger sans frottements. Il est alors surdimensionné et sa trop grande vitesse provoque un bruit important, à la fois aérien et solidien, qui se propage à travers la structure du bâtiment. Ce document prévoit donc une réduction sélective de la vitesse.

En ajustant une ou plusieurs vitesses de référence pour le moteur, par exemple une vitesse de référence plus faible pour le déroulement que pour l'enroulement, l'utilisateur peut réduire la puissance du moteur en fonction du besoin et ainsi réduire le bruit. Une vitesse très basse peut également être choisie pour un fonctionnement nocturne.

Cependant, plusieurs inconvénients résultent d'une trop grande liberté de réglages offerte à l'utilisateur. Par exemple, des produits identiques disposés sur une même façade et obéissant à un ordre général peuvent présenter des vitesses sensiblement différentes du fait de réglages de l'utilisateur, donnant une impression de désordre et de mauvaise qualité de l'installation. Ce défaut est particulièrement important pour l'architecte, attaché à l'harmonie d'une façade d'immeuble de bureaux, d'un établissement scolaire ou industriel. Ce défaut est tout aussi important dans le cas d'une baie vitrée d'un séjour d'habitation individuelle, comprenant simplement deux produits identiques et adjacents.

Par ailleurs, n'imposer aucune limite au réglage de vitesse peut conduire à des situations aberrantes quand il existe des ordres différenciés pour un mouvement en vitesse rapide et pour un mouvement en vitesse lente. Par exemple, les réglages successifs de la vitesse peuvent donner lieu à un mouvement résultant d'une commande « vitesse rapide » plus lent que celui résultant d'une commande « vitesse lente ».

De plus, dans le cas où l'ajustement des vitesses est confié à un installateur, il apparaît un problème de consommation de temps nécessité par le réglage, d'autant plus inacceptable qu'il s'agit de répéter cette même tâche sur des produits identiques disposés dans un même bâtiment, alors que la structure des produits et du bâtiment conduira logiquement à une même valeur de réglage.

Enfin, dans le cas où le réglage est effectué en atelier ou en usine, par exemple chez le fabricant qui intègre l'actionneur électrique dans ses volets roulants, les conditions sonores sont le plus souvent incompatibles avec une écoute permettant un réglage de qualité. Il en est de même sur le site de l'installation, quand le réglage est effectué par un installateur. Celui-ci intervient en pleine journée, quand le niveau sonore extérieur est important, alors que c'est en soirée, et plus encore la nuit, que les bruits engendrés par la manoeuvre des produits sont le plus perceptibles.

Il existe donc également un besoin de réglage ne rendant pas nécessaire la présence d'un installateur.

Le document GB 2255421 décrit un procédé de modulation de la vitesse de rotation d'un moteur d'un système de climatisation.

Le document FR 2919892 décrit un procédé de récupération de l'énergie potentielle d'un tablier de volet roulant. Ce procédé prévoit une modulation de la vitesse du moteur dans le but de réaliser une adaptation de puissance.

Le document US6497267 décrit un dispositif de store motorisé utilisant un moteur alimenté en PWM.

Le but de l'invention est de fournir un procédé de réglage remédiant aux inconvénients ci-dessus et améliorant les procédés connus de l'art antérieur. En particulier, l'invention fournit un procédé simple permettant de limiter les nuisances sonores sans nuire à la cohérence de fonctionnement de l'actionneur ou à la cohérence de fonctionnement de différents actionneurs au sein d'une installation.

Selon l'invention, le procédé permet de régler la vitesse d'un actionneur électrique d'un équipement domotique motorisé, l'actionneur électrique comprenant un moyen de régulation de la vitesse de l'actionneur par une consigne de vitesse. Le procédé comprend une étape d'ajustement de la consigne de vitesse dans une plage limitée de vitesse au voisinage d'une valeur-cible prédéterminée.

L'actionneur électrique permet de mettre en mouvement un élément de fermeture, d'occultation ou de protection solaire d'un équipement domotique motorisé. L'étape d'ajustement n'impacte pas une deuxième consigne de vitesse de l'actionneur.

En outre, le procédé comprend une étape de mesure d'un signal vibratoire et/ou acoustique et l'étape d'ajustement est réalisée de manière automatique, en utilsant la mesure du signal vibratoire et/ou acoustique.

Différents modes d'exécution du procédé sont définis par les revendications 2 à 9.

Selon l'invention, le procédé permet de régler une installation comprenant un premier et au moins un deuxième actionneurs électriques d'équipements domotiques motorisés, les actionneurs électriques comprenant chacun un moyen de régulation de la vitesse de l'actionneur par une consigne de vitesse. Le procédé comprend une étape de mise en oeuvre du procédé de réglage du premier actionneur selon le procédé de réglage défini précédemment, une étape d'émission d'une information relative à la consigne de vitesse ajustée pour le premier actionneur vers l'au moins un deuxième actionneur et une étape de détermination et d'enregistrement d'une consigne de vitesse dans chacun des au moins un deuxième actionneur en utilisant l'information.

Selon l'invention, le procédé permet de régler une installation comprenant plusieurs actionneurs électriques d'équipements domotiques motorisés, les actionneurs électriques comprenant chacun un moyen de régulation de la vitesse de l'actionneur par une consigne de vitesse. Le procédé comprend une étape de mise en oeuvre du procédé de réglage défini précédemment au niveau d'au moins certains des actionneurs électriques, une étape de sélection d'une consigne de vitesse commune, une étape d'émission d'une information relative à la consigne de vitesse commune vers au moins un actionneur et une étape d'enregistrement de cette consigne de vitesse commune dans chaque actionneur.

L'étape d'émission de consigne de vitesse peut être réalisable à l'aide de moyens spécifiques et/ou à l'aide d'une manipulation particulière d'une unité de commande à distance de l'actionneur ou ne peut être réalisée qu'à l'aide d'un outil spécifique, différent d'une unité de commande à distance de l'actionneur.

Selon l'invention, un actionneur électrique comprend un moyen de régulation de la vitesse de l'actionneur. Il comprend des moyens matériels et/ou logiciels de mise en oeuvre du procédé de réglage défini précédemment.

L'actionneur peut comprendre une mémoire pour contenir une valeur de consigne de vitesse, un moyen d'enregistrement de cette valeur en mémoire et des moyens de calcul pour déterminer cette valeur.

L'actionneur peut comprendre un moyen d'émission d'un signal de retour comprenant une information sur la consigne de vitesse.

Selon l'invention, un équipement domotique comprend un actionneur défini précédemment. Il comprend un capteur apte à mesurer des micro-déplacements pour assurer une détection de fin de course en butée ou pour assurer une fonction de détection d'obstacle et apte à mesurer le signal utilisé dans le procédé de réglage défini précédemment.

Selon l'invention, un programme informatique comprend un moyen de code de programme informatique adapté à la réalisation des étapes du procédé défini précédemment, lorsque le programme est exécuté sur un ordinateur.

L'invention sera mieux comprise à la lecture de la description qui va suivre, donnée uniquement à titre d'exemple et faite en se référant aux dessins annexés sur lesquels :
La figure 1 représente une installation comprenant des équipements domotiques motorisés selon l'invention, avec une représentation schématique d'un tel équipement.
La figure 2 représente la superposition de fréquences de réglage avec des fréquences de résonance d'un équipement domotique de l'installation.
La figure 3 représente un mode d'exécution du procédé de réglage d'un équipement motorisé selon l'invention.
La figure 4 représente un mode d'exécution du procédé de réglage d'une installation d'équipements domotiques, ceux-ci étant individuellement aptes à utiliser le procédé de réglage selon l'invention.
Les figures 5 et 6 décrivent un deuxième mode de réalisation du procédé de réglage de l'installation.

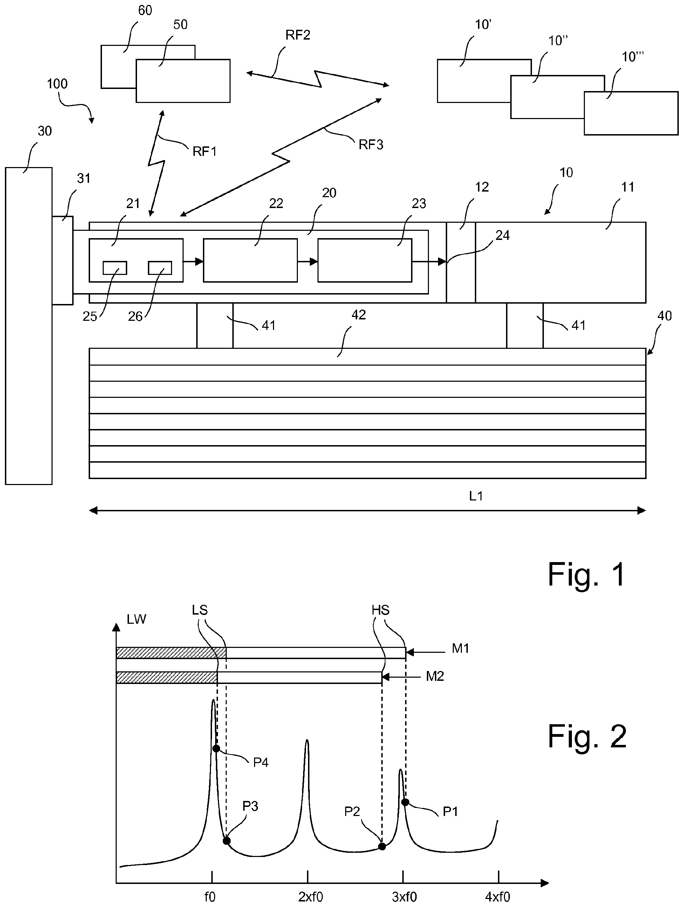

La figure 1 représente une installation 100 comprenant plusieurs équipements domotique motorisés 10, 10', 10", 10'" selon l'invention. L'installation comprend par exemple un premier équipement 10, comprenant un actionneur électrique 20 et raccordé au bâti 30 du bâtiment, afin de mettre en mouvement un élément de fermeture, d'occultation ou de protection solaire 40, par exemple le tablier d'un volet roulant ou d'une porte de garage, enroulable sur un tube 11 mobile en rotation autour d'un axe horizontal et entraîné en rotation par l'actionneur électrique par un organe de liaison 12, tel une roue d'entraînement.

L'actionneur électrique comprend un récepteur d'ordres 21 raccordé à un moyen de régulation de vitesse 22, lui-même raccordée à un motoréducteur 23 dont l'arbre de sortie 25 est mobile en rotation et est raccordé à l'organe de liaison 12. Le moyen 22 de régulation de vitesse permet de réguler une première vitesse de l'actionneur par une première consigne de vitesse et de réguler une deuxième vitesse de l'actionneur par une dexuième consigne de vitesse.

L'actionneur 20 est par ailleurs raccordé au bâti par un accessoire de fixation 31. Ainsi, sur réception d'un ordre de mouvement, le récepteur d'ordres active le moyen de régulation de vitesse 22en relation avec l'ordre reçu, qui lui-même alimente le motoréducteur et provoque ainsi la rotation de l'arbre de sortie, donc du tube. En particulier, la vitesse de rotation de l'arbre de sortie peut être asservie à une consigne, comme décrit dans l'art antérieur. Le capteur de rotation nécessaire à une mesure de vitesse permettant l'asservissement n'est pas représenté. Ce capteur de rotation peut par exemple comprendre des sondes à effet Hall détectant le champ magnétique du rotor ou peut par exemple être réalisé à l'aide de moyens d'analyse du courant dans le moteur. Le moyen de régulation de vitesse est apte à faire varier un paramètre électrique, par exemple la tension d'alimentation appliquée au motoréducteur, de manière à obtenir une vitesse de rotation de l'arbre de sortie égale à la consigne de vitesse ou aussi proche que possible de la consigne de vitesse.

Le récepteur d'ordres comprend également une mémoire 25 comprenant sous forme de programme les instructions nécessaires à l'exécution du procédé d'apprentissage selon l'invention, ainsi qu'un capteur 26 dont le rôle sera décrit plus bas.

Le tube est raccordé à une première extrémité 42 de l'élément de fermeture par des éléments de liaison 41. S'agissant d'un volet roulant, les éléments de liaison sont par exemple de type rigide et permettant de maintenir une pression sur la première extrémité quand le tablier du volet roulant est entièrement déroulé. Du fait de cette liaison rigide, le tablier du volet roulant est sollicité par les vibrations mécaniques issues de l'actionneur.

L'installation comprend également une unité de commande à distance 50, apte à émettre des ordres de commande vers le récepteur d'ordres. Préférentiellement, une première liaison RF1 entre l'unité de commande à distance et le récepteur d'ordres est de type radiofréquences et bidirectionnelle.

L'unité de commande à distance peut également communiquer vers d'autres équipements domotiques motorisés 10', 10" et 10'" de même type et de même dimensions que le premier équipement, à l'aide d'une deuxième liaison RF2.

La communication peut également se faire vers d'autres équipements, de type différent, non représentés.

Préférentiellement, la communication a lieu au moyen d'un protocole unifié, sur un réseau domotique. Le récepteur d'ordres peut ainsi communiquer directement avec les autres équipements domotiques motorisés, sur le réseau domotique, à l'aide d'une troisième liaison RF3.

Comme dans l'art antérieur, l'unité de commande à distance permet d'envoyer une commande de mouvement à vitesse rapide (HS) ou une commande de mouvement à vitesse lente (LS).

Un outil d'installation 60 est représenté sur la figure 1. L'outil d'installation est utilisé par un installateur et n'est présent dans l'installation qu'au moment de sa configuration. Il communique avec les différents équipements domotiques motorisés de la même façon que l'unité de commande à distance, mais avec des droits éventuellement plus étendus.

D'autres unités de commande, semblables à l'unité de commande à distance 50 et disposant de droits identiques peuvent appartenir à l'installation.

L'actionneur comprend des moyens matériels et/ou logiciels permettant de régir son fonctionnement conformément au procédé de réglage objet de l'invention. Les moyens logiciels peuvent notamment comprendre un moyen de code de programme informatique adapté à la réalisation des étapes du procédé de réglage selon l'invention, lorsque le programme tourne sur un ordinateur.

La figure 2 représente la superposition de fréquences de réglage avec des fréquences de résonance de l'équipement 10, sous forme d'un diagramme simplifié donnant en ordonnées la puissance acoustique LW rayonnée par l'équipement, en fonction de la fréquence représentée en abscisses.

A une fréquence de rotation de l'arbre de sortie de l'actionneur correspond une pluralité de fréquences excitatrices engendrées par l'actionneur et dont les origines sont électromagnétiques (réluctance variable, attraction d'encoches, etc.) ou sont purement mécaniques (fréquences d'engrènement, c'est-à-dire de mise en contact des dentures des pignons de différents étages d'un réducteur inclus dans le motoréducteur). Certaines de ces fréquences sont trop basses ou trop élevées pour conduire à des effets audibles. Pour simplifier, on considère qu'un réglage de la vitesse élevée donne naissance à une fréquence excitatrice dominante HS, et qu'un réglage de la vitesse lente donne naissance à une fréquence excitatrice dominante LS.

Plusieurs résonances de l'équipement sont observées, à une fréquence fondamentale f0 et à des fréquences harmoniques, multiples de la fréquence fondamentale.

Par exemple, la fréquence fondamentale correspond à un premier mode de flexion du tube 11 selon sa longueur et se déduit de la longueur L1 du tube et de la célérité des ondes vibratoires dans l'acier formant le tube. Alternativement, ou de manière complémentaire, cette fréquence est celle d'un premier mode de flexion de lames constituant le tablier et de même longueur L1 que le tube. Les vibrations excitatrices de l'équipement proviennent du motoréducteur et sont transmises au tube par l'arbre de sortie et par la roue. Elles sont de plus transmises au tablier par les liens rigides.

Selon la vitesse de rotation, la fréquence excitatrice correspond ou non à une résonance de l'équipement et il est important d'éviter une telle correspondance. Un problème vient de ce que la vitesse rapide et la vitesse lente sont souvent liées par un rapport constant. Par exemple, la vitesse lente est égale à 40% de la vitesse rapide.

Selon un réglage d'origine M1, on constate que la vitesse rapide HS correspond à une résonance (harmonique 3) de la structure de l'équipement, comme représenté par le point P1. Pour éviter cette résonance, le fabricant (ou l'installateur ou l'utilisateur) réduit la consigne de vitesse rapide jusqu'à un deuxième réglage M2 donnant satisfaction, comme représenté par le point P2.

Comme on le constate, l'effet du réglage de vitesse rapide HS est de faire passer le point de fonctionnement en vitesse lente LS de la position P3 à la position P4.

Il en résulte que l'équipement rayonne maintenant une puissance acoustique plus grande en vitesse lente (dite « silencieuse ») qu'en vitesse rapide, ce qui, pour un utilisateur non averti de la physique vibratoire est parfaitement incompréhensible.

Il est donc essentiel qu'un réglage de vitesse de consigne n'impacte pas une autre vitesse de consigne. Il est néanmoins important que cette indépendance des réglages ne puisse provoquer une inversion de signification des commandes, comme mentionné plus haut. Il est enfin important que le fonctionnement de l'équipement réglé reste très proche de celui d'un équipement de référence, pour lequel le fabricant a réalisé les tests d'endurance, de qualification, les essais normatifs et/ou les homologations.

L'invention repose sur ces divers constats, complétés par le constat que les résonances de l'équipement ne sont véritablement importantes et gênantes que lorsqu'elles se produisent sur une plage de fréquences très étroite autour d'un pic de résonance.

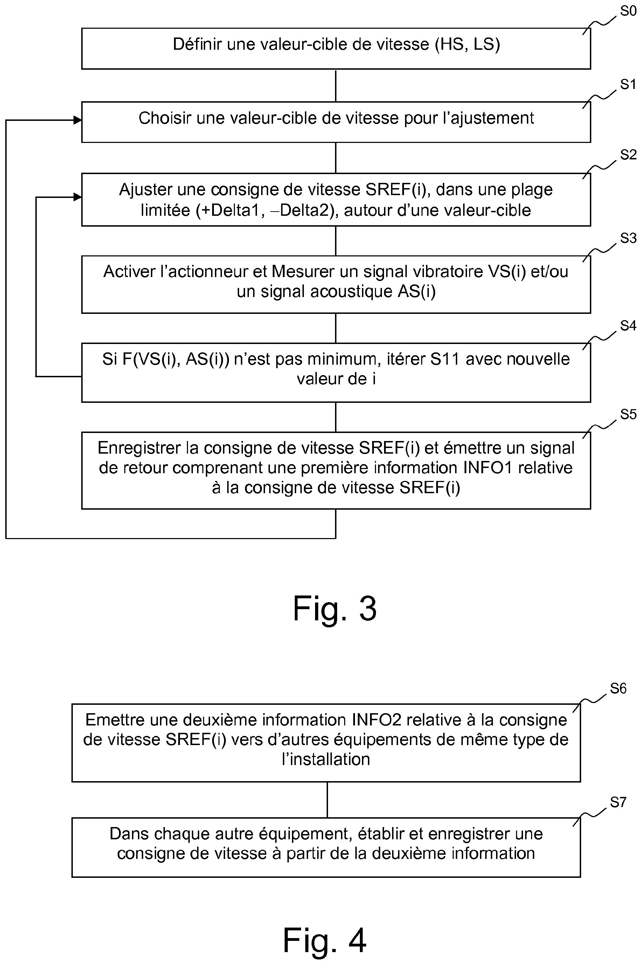

La figure 3 représente sous forme d'ordinogramme un mode d'exécution d'un procédé de réglage de l'équipement 10.

Dans une étape préliminaire S0, le fabricant de l'actionneur définit ou prédétermine une valeur-cible de vitesse pour la vitesse rapide et une valeur-cible de vitesse pour la vitesse lente. Ces valeurs sont mémorisées dans la mémoire 25. D'autres valeurs peuvent être prévues, par exemple une vitesse intermédiaire utilisée dans des phases d'approche d'une butée mécanique, ou encore une vitesse très rapide utilisée pour écourter un réglage ou pour une situation d'urgence. Ainsi sont présélectionnées une ou plusieurs valeurs-cible.

Dans une première étape S1, le monteur de l'équipement (si le procédé est utilisé dans l'atelier de fabrication) ou l'installateur, ou encore l'utilisateur, si le procédé est utilisé sur le site de l'installation, choisit la valeur-cible de vitesse prédéterminée à ajuster, par exemple s'il va ajuster la vitesse rapide ou s'il va ajuster la vitesse lente. L'ajustement consiste à fixer une valeur de consigne pour cette vitesse, par exemple en modifiant la valeur de valeur-cible prédéterminée, c'est-à-dire initialement présente en mémoire. Ainsi, autrement dit, l'ajustement consiste à remplacer la valeur-cible prédéterminée ou initiale par une valeur de consigne déterminée.

Dans une deuxième étape S2, on choisit une consigne de vitesse SREF(i). L'indice i montre que le choix est réalisé préférentiellement de manière incrémentale dans une liste de valeurs situées dans une plage limitée autour de la valeur-cible. On appelle +Delta1 et -Delta2 les écarts maximum à la valeur-cible. Ces écarts ne sont pas nécessairement égaux en valeur absolue. L'essentiel est que la plage des valeurs possibles soit restreinte, par exemple que les écarts Delta1 et/ou Delta2 soit au plus égaux à 20% de la valeur-cible et préférentiellement au plus égaux à 10% de la valeur-cible. La valeur de consigne peut donc être ajustée de part et d'autre de la valeur-cible.

Dans une troisième étape S3, on active l'actionneur et on mesure un signal vibratoire VS(i) et/ou un signal acoustique AS(i).

Préférentiellement, cette mesure est effectuée à l'aide du capteur 26 appartenant à l'équipement. Ce capteur est par exemple un microphone à électret. Le capteur peut aussi comprendre un accéléromètre, servant par ailleurs à une fonction de détection de couple et/ou d'effort sur l'équipement par mesure de micro-déplacements de celui-ci. Ce capteur est alors utilisé principalement pour assurer une détection de fin de course en butée ou pour assurer une fonction de détection d'obstacle, mais il sert de plus à recueillir le signal vibratoire. Il n'y a donc aucun coût ajouté à l'équipement. Le capteur 26 n'est pas nécessairement localisé dans le récepteur d'ordres, ni même dans l'actionneur. Par exemple, le capteur peut être disposé sur un élément du tablier et communiquer par radiofréquences avec le récepteur d'ordres.

Alternativement, la mesure est effectuée à l'aide d'un instrument de mesure disposé au voisinage de l'équipement.

Alternativement, la mesure est une évaluation auditive directement réalisée par le monteur, l'installateur ou l'utilisateur de l'équipement.

Quels que soient les capteurs et/ou moyens de mesure utilisés, on élabore une fonction F, représentative de l'état vibratoire et/ou acoustique de l'équipement en fonctionnement, et qu'on va chercher à minimiser. La fonction F est par exemple une combinaison linéaire, ou toute autre fonction de deux variables, des mesures acoustiques et vibratoires moyennées sur la durée d'activation de l'actionneur. Alternativement la fonction F est une moyenne d'une seule série de mesures, ou encore une fonction subjective résultant de l'expérience et de la mémoire auditive de celui qui réalise l'activation de l'actionneur.

Dans une quatrième étape S4, on détermine si la fonction F est minimum. Dans le cas contraire, on itère la deuxième étape en choisissant une nouvelle valeur de consigne de vitesse, par exemple par incrémentation de l'indice i dans une liste de valeurs. Alternativement, et notamment dans le cas où la mesure est subjective, on remplace le critère : « minimum » par : « acceptable ». Il peut suffire en effet d'atteindre une valeur de bruit inférieure à un seuil.

Quand la fonction F a atteint un minimum ou un niveau acceptable, on passe à la cinquième étape S5 du procédé, dans laquelle on enregistre la consigne de vitesse SREF(i) dans la mémoire 25 et dans laquelle l'équipement émet un signal de retour comprenant une première information INFO1 relative à la consigne de vitesse.

Le signal de retour peut être émis vers l'unité de commande à distance à l'aide de la liaison RF1. Il peut être émis sous forme sensitive, à destination du monteur, de l'installateur ou de l'utilisateur, par exemple sous forme d'un signal visuel et/ou sonore. Dans tous les cas, ce signal est porteur d'une information sur la consigne de vitesse retenue par le procédé et enregistrée dans la mémoire.

Le signal peut contenir explicitement la valeur de la vitesse de consigne. Celle-ci s'affiche alors sur l'unité de commande à distance. Dans un mode de réalisation simple, le signal est donné par un mouvement de l'actionneur, indiquant la valeur de l'indice i : par exemple trois mouvements brefs successifs pour indiquer que la valeur de vitesse retenue est la troisième de la liste. La première information peut contenir une indication de la situation de la consigne de vitesse retenue par rapport à la limite inférieure ou par rapport à la limite supérieure, simplement pour informer celui qui fait le réglage qu'il a atteint un maximum de la plage de variation autorisée.

Alternativement, le signal de retour est émis également lors d'un bouclage de l'étape S4 vers l'étape S2. Plutôt que provoquer un bouclage de l'étape S4 vers l'étape S2, le procédé peut effectuer un bouclage de l'étape S3 vers l'étape S2 et accumuler un ensemble de jeux de mesures avant de passer dans une étape S4 dans laquelle on détermine la fonction F pour chacun des jeux de mesure et dans laquelle on recherche la valeur de l'indice i ayant donné le minimum de la fonction F.

La valeur finale de la vitesse de consigne peut également être calculée par interpolation ou par tout autre procédé, à partir de l'évolution de la fonction F.

De manière simple, l'indice i varie par incrémentation (ou de manière équivalente par décrémentation) mais on peut également prendre une loi de variation de i se prêtant à une recherche par dichotomie, éventuellement plus rapide à converger que par incrémentation.

A l'issue de la cinquième étape, la vitesse de consigne donnant le meilleur résultat au voisinage de la valeur-cible de vitesse est donc mémorisée et servira désormais de consigne pour l'asservissement de vitesse. Elle se substitue à la valeur-cible de vitesse, qui est utilisée comme consigne de vitesse tant que le procédé de réglage n'a pas été mis en oeuvre.

Préférentiellement, la valeur-cible de vitesse reste néanmoins mémorisée pour un éventuel retour de l'équipement dans une situation initiale.

On reprend le procédé à la première étape S1 si on désire ajuster une consigne de vitesse au voisinage d'une autre valeur-cible de vitesse.

L'étape d'ajustement de la première consigne de vitesse dans une plage limitée de vitesse au voisinage de la première valeur-cible prédéterminée n'impacte pas une deuxième consigne de vitesse de l'actionneur. Ainsi, l'étape d'ajustement de la première consigne de vitesse dans une plage limitée de vitesse au voisinage de la première valeur-cible prédéterminée est sans effet sur la deuxième consigne de vitesse de l'actionneur.

La figure 4 représente un mode d'exécution d'un procédé de réglage d'une installation d'équipements domotiques, ceux-ci étant individuellement aptes à la mise en oeuvre du procédé de réglage de la figure 3. Ce mode d'exécution s'applique au cas d'équipements identiques.

Dans une sixième étape S6, faisant suite éventuellement à la cinquième étape du procédé de réglage d'un premier équipement 10, on émet vers les autres équipements de même type de l'installation 10', 10", 10"' une deuxième information INFO2 relative à la consigne de vitesse retenue dans le procédé de réglage du premier équipement.

L'émission de la deuxième information est par exemple réalisée directement par le récepteur d'ordres du premier équipement, au moyen de la troisième liaison radiofréquences RF3. Alternativement, elle a lieu à partir de l'unité de commande à distance, un utilisant la deuxième liaison radiofréquences RF2.

La deuxième information INFO2 peut être identique à la première information INFO1 ou peut être plus ou moins détaillée. Elle comprend dans tous les cas une information sur la consigne de vitesse enregistrée dans l'actionneur du premier équipement après exécution du procédé de réglage de ce premier équipement.

Ainsi, dans une septième étape S7, chaque autre équipement de même type que le premier équipement établit la valeur de consigne de vitesse à partir de l'information reçue, et enregistre cette consigne de vitesse.

A l'issue de l'exécution du procédé de réglage de l'installation, tous les actionneurs de même type ont enregistré dans leur mémoire 25 une même valeur de consigne de vitesse, sans qu'il soit besoin de répéter les étapes d'activation et de mesure pour chacun des actionneurs. Que ce soit en atelier ou sur site, un temps précieux est ainsi économisé.

Préférentiellement, le procédé de réglage de l'installation est effectué de manière automatique, ou semi-automatique, par communication à l'aide du réseau domotique.

Alternativement, une manipulation spécifique de l'unité de commande à distance permet, par exemple à l'installateur, de régler chacun des autres équipements en fonction de la connaissance qu'il a acquise grâce à l'émission du signal de retour comprenant la première information.

Dans le cas le plus simple, l'installateur sait par exemple que l'indice i a atteint la valeur 3 lors du réglage du premier équipement. Il peut alors faire passer les autres équipements dans un mode d'apprentissage où ils sont aptes à exécuter la septième étape du procédé, tandis que la sixième étape du procédé consiste par exemple à émettre la deuxième information sous la forme de 3 appuis successifs sur une touche particulière d'un clavier de l'unité de commande à distance.

Chacun des autres équipements domotiques est néanmoins apte à subir le procédé de réglage de la figure 3, afin de jouer éventuellement le rôle de premier équipement.

Le procédé de réglage d'une installation est applicable aussi-bien en atelier de montage que sur le site final de l'installation.

On a décrit l'exécution d'un mode de réalisation du procédé de réglage d'un équipement domotique motorisé et l'exécution d'un mode de réalisation du procédé de réglage d'une installation par utilisation de l'unité de commande à distance 50.

Alternativement, ces différentes étapes ne peuvent être réalisées qu'au moyen d'un outil d'installation 60, qui possède des droits spécifiques pour l'accès aux étapes de réglage. L'outil d'installation n'est alors utilisé que par un installateur, sur site, ou encore par le monteur des équipements en atelier de montage.

La liaison entre l'outil spécifique et un actionneur peut être différente de celle utilisée entre une unité de commande à distance et un actionneur : par exemple cette liaison peut être de type filaire, par utilisation de courants porteurs ou par tout autre moyen de communication.

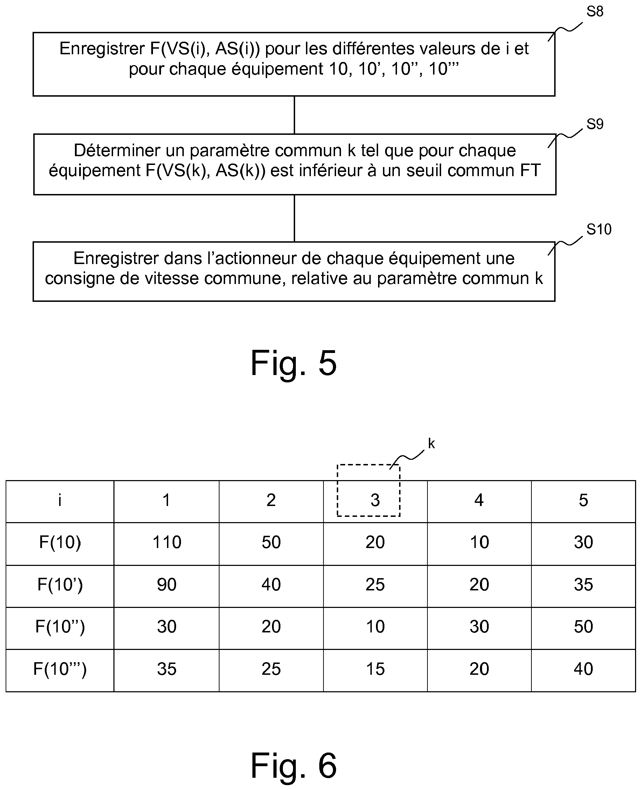

Les figures 5 et 6 décrivent un deuxième mode de réalisation du procédé de réglage de l'installation. Ce mode de réalisation est particulièrement intéressant si les équipements présentent des différences structurelles.

Dans ce deuxième mode de réalisation, on procède à un réglage individuel pour chacun des équipements de l'installation. On entend ici que les étapes S2 à S4 sont au moins parcourues pour toutes les valeurs de l'indice i, et pour chaque équipement.

C'est ce qui se produit dans une huitième étape S8, dans laquelle, pour chaque valeur de l'indice i (ou de manière équivalente pour chaque valeur incrémentale de la consigne de vitesse dans une plage prédéfinie) on réalise la mesure lors d'une activation de l'actionneur et on enregistre, soit dans la mémoire de l'actionneur, soit dans un outil de réglage 26, le résultat de la fonction F. Cet enregistrement est répété pour chaque équipement 10, 10', 10" et 10"'. On obtient ainsi l'équivalent du tableau représenté à la figure 6, dans lequel on suppose que l'ajustement de consigne de vitesse ne peut prendre que 5 valeurs possibles, représentées par un indice i variant de 1 à 5.

On constate sur ce tableau que les équipements 10 et 10' ont un comportement acoustique et vibratoire voisin, et qu'il en est de même pour les équipements 10" et 10"', les deux groupes ayant par contre des comportements différents.

Dans une neuvième étape S9, on détermine une consigne de vitesse commune, acceptable par tous les équipements, c'est-à-dire telle que la fonction F relative à chaque équipement, et pour la consigne de vitesse considérée, est au moins inférieure ou égale à un seuil acceptable FT, commun à tous les équipements. Par exemple, si on fixe la valeur 25 pour seuil FT, alors on constate que le paramètre k correspond à la valeur 3 de l'indice i. C'est cette consigne de vitesse commune qui est sélectionnée dans la neuvième étape.

Dans une dixième étape S10, une information sur la consigne commune est diffusée vers chaque actionneur et chaque actionneur enregistre une consigne de vitesse commune.

Préférentiellement, ces différentes étapes sont réalisées à l'aide de l'outil de réglage spécifique 60, soit sur site soit en atelier de montage des équipements domotiques motorisés.

Si, dans la neuvième étape, le seuil FT est tel que plusieurs valeurs du paramètre k sont possibles, par exemple k = 3 ou k = 4 si FT est pris égal à 30, alors la valeur commune retenue sera celle qui minimise l'écart à la valeur-cible, ou encore celle qui minimise une moyenne ou une somme des fonctions F des équipements.

L'invention est donc adaptée à la fois au cas d'équipements identiques (et installés ou destinés à être installés dans des conditions de bâti similaires) ou au cas d'équipements différents nécessitant une personnalisation. Le fait que la plage d'ajustement de la vitesse de consigne soit limitée évite alors de provoquer les inconvénients mentionnés plus haut.

Dans la présente demande, les expressions « régulation de vitesse par une consigne de vitesse » et « asservissement de vitesse à une vitesse de consigne » sont équivalentes.

## Revendications

1. Procédé de réglage d'une première vitesse d'un actionneur électrique (20) de mise en mouvement d'un élément (40) de fermeture, d'occultation ou de protection solaire d'un équipement domotique motorisé (10), l'actionneur électrique comprenant un moyen (22) de régulation de la première vitesse de l'actionneur par une première consigne de vitesse, comprenant une étape d'ajustement de la première consigne de vitesse dans une plage limitée de vitesse au voisinage d'une première valeur-cible prédéterminée, cette étape n'impactant pas une deuxième consigne de vitesse de l'actionneur, **caractérisé en ce que** le procédé comprend une étape de mesure d'un signal vibratoire et/ou acoustique et **en ce que** l'étape d'ajustement est réalisée de manière automatique, en utilisant la mesure du signal vibratoire et/ou acoustique.

2. Procédé de réglage selon l'une des revendications précédentes, **caractérisé en ce que** l'écart entre la première consigne de vitesse et la première valeur-cible est choisi dans une liste et/ou **en ce que** la plage de vitesse est limitée de sorte que l'écart maximal entre la première consigne de vitesse et la première valeur-cible est inférieur à 20% de la valeur cible.

3. Procédé de réglage selon l'une des revendications précédentes, **caractérisé en ce que** la plage est constituée par un nombre fini de valeurs discrètes, par exemple 6, voire 8, voire 10, les valeurs discrètes étant par exemple uniformément réparties sur la plage.

4. Procédé de réglage selon l'une des revendications précédentes, **caractérisé en ce qu'**il comprend une étape d'émission d'un signal de retour comprenant une première information relative à la première consigne de vitesse, notamment un signal de retour de type sensoriel.

5. Procédé de réglage selon la revendication 4, **caractérisé en ce que** la première information comprend une indication qu'un écart maximum de la première consigne de vitesse est atteint.

6. Procédé de réglage selon l'une des revendications précédentes, **caractérisé en ce qu'**il comprend une itération de l'étape d'ajustement, pour au moins une autre valeur-cible de consigne de vitesse, notamment une deuxième valeur-cible relative à la deuxième consigne de vitesse et/ou **en ce que** l'étape d'ajustement est réalisable à l'aide de moyens spécifiques et/ou à l'aide d'une manipulation particulière d'une unité de commande à distance de l'actionneur ou ne peut être réalisée qu'à l'aide d'un outil spécifique, différent d'une unité de commande à distance de l'actionneur.

7. Procédé de réglage d'une installation (100) comprenant un premier (20) et au moins un deuxième actionneurs électriques de mise en mouvement d'éléments (40) de fermeture, d'occultation ou de protection solaire d'équipements domotiques motorisés (10, 10', 10", 10"'), les actionneurs électriques comprenant chacun un moyen de régulation de la vitesse de l'actionneur par une consigne de vitesse, **caractérisé en ce qu'**il comprend une étape de mise en oeuvre du procédé de réglage du premier actionneur selon l'une des revendications précédentes, une étape d'émission d'une information relative à la première consigne de vitesse ajustée pour le premier actionneur vers l'au moins un deuxième actionneur et une étape de détermination et d'enregistrement d'une consigne de vitesse dans chacun des au moins un deuxième actionneur en utilisant l'information.

8. Procédé de réglage d'une installation (100) comprenant plusieurs actionneurs électriques de mise en mouvement d'éléments (40) de fermeture, d'occultation ou de protection solaire d'équipements domotiques motorisés (10, 10', 10", 10"'), les actionneurs électriques comprenant chacun un moyen de régulation de la vitesse de l'actionneur par une consigne de vitesse, **caractérisé en ce qu'**il comprend une étape de mise en oeuvre du procédé de réglage selon l'une des revendications 1 à 6 au niveau d'au moins certains des actionneurs électriques, une étape de sélection d'une consigne de vitesse commune, une étape d'émission d'une information relative à la consigne de vitesse commune vers au moins un actionneur et une étape d'enregistrement de cette consigne de vitesse commune dans chaque actionneur.

9. Procédé de réglage selon la revendication 7 ou 8, **caractérisé en ce que** l'étape d'émission de l'information relative à la première consigne de vitesse est réalisable à l'aide de moyens spécifiques et/ou à l'aide d'une manipulation particulière d'une unité de commande à distance de l'actionneur ou ne peut être réalisée qu'à l'aide d'un outil spécifique, différent d'une unité de commande à distance de l'actionneur.

10. Actionneur électrique (20) de mise en mouvement d'un élément (40) de fermeture, d'occultation ou de protection solaire d'un équipement domotique motorisé (10), comprenant un moyen (22) de régulation de la vitesse de l'actionneur, **caractérisé en ce qu'**il comprend des moyens (21, 25, 26) matériels et/ou logiciels de mise en oeuvre du procédé de réglage selon l'une des revendications précédentes.

11. Actionneur selon la revendication précédente, **caractérisé en ce qu'**il comprend une mémoire (26) pour contenir une valeur de consigne de vitesse, un moyen d'enregistrement de cette valeur en mémoire et des moyens de calcul pour déterminer cette valeur.

12. Actionneur selon la revendication précédente, **caractérisé en ce qu'**il comprend un moyen d'émission d'un signal de retour comprenant une information sur la première consigne de vitesse.

13. Equipement domotique (10) comprenant un actionneur (20) selon l'une des revendications 10 à 12, **caractérisé en ce qu'**il comprend un capteur apte à mesurer des micro-déplacements pour assurer une détection de fin de course en butée ou pour assurer une fonction de détection d'obstacle et apte à mesurer le signal utilisé dans le procédé de réglage selon les revendications 1 à 6.

## Patentansprüche

1. Verfahren zur Regelung einer ersten Geschwindigkeit eines elektrischen Stellgliedes (20), um ein Element (40) zum Schließen, zur Verdunkelung oder für den Sonnenschutz, einer motorisierten Hausanlage (10) in Bewegung zu setzen, wobei das elektrische Stellglied ein Mittel (22) zur Regulierung der ersten Geschwindigkeit des Stellgliedes durch einen ersten Geschwindigkeitssollwert umfasst, das Folgendes umfasst
einen Einstellungsschritt des ersten Geschwindigkeitssollwertes in einem begrenzten Geschwindigkeitsbereich in der Nähe eines ersten zuvor bestimmten Zielwertes, wobei dieser Schritt sich nicht auf einen zweiten Geschwindigkeitssollwert des Stellgliedes auswirkt, **dadurch gekennzeichnet, dass** das Verfahren Folgendes umfasst
einen Schritt zum Messen eines Vibrations- und/oder Akustiksignals und dadurch, dass der Einstellungsschritt automatisch durchgeführt wird, indem das Maß des Vibrations- und/oder Akustiksignals verwendet wird.

2. Verfahren zur Regelung nach dem vorhergehenden Anspruch, **dadurch gekennzeichnet, dass** der Unterschied zwischen dem ersten Geschwindigkeitssollwert und dem ersten Zielwert aus einer Liste ausgewählt wird, und/oder dass der Geschwindigkeitsbereich dergestalt begrenzt ist, dass der maximale Unterschied zwischen dem ersten Geschwindigkeitssollwert und dem ersten Zielwert unter 20 % von dem Zielwert liegt.

3. Verfahren zur Reglung nach einem der vorhergehenden Ansprüche, **dadurch gekennzeichnet, dass** der Bereich aus einer begrenzten Anzahl an diskreten Werten besteht, beispielsweise 6, ja sogar 8, ja sogar 10, wobei die diskreten Werte beispielsweise gleichmäßig in dem Bereich verteilt sind.

4. Verfahren zur Reglung nach einem der vorhergehenden Ansprüche, **dadurch gekennzeichnet, dass** es einen Emissionsschritt eines Rückmeldesignales umfasst, das erste Informationen hinsichtlich eines ersten Geschwindigkeitssollwertes umfasst, insbesondere ein Rückmeldesignal der sensorischer Art.

5. Verfahren zur Reglung nach Anspruch 4, **dadurch gekennzeichnet, dass** die ersten Informationen eine Angabe umfassen, dass ein maximaler Unterschied des ersten Geschwindigkeitssollwertes erreicht ist.

6. Verfahren zur Reglung nach einem der vorhergehenden Ansprüche, **dadurch gekennzeichnet, dass** es eine Wiederholung des Einstellungsschrittes für mindestens einen anderen Zielwert des Geschwindigkeitssollwertes, insbesondere einen zweiten Zielwert hinsichtlich des zweiten Geschwindigkeitssollwertes umfasst, und/oder dadurch, dass der Einstellungsschritt mit Hilfe spezifischer Mittel und/oder mit Hilfe einer besonderen Bedienung einer Fernsteuerungseinheit des Stellgliedes realisiert werden kann, oder nur mit Hilfe eines speziellen Werkzeuges, das sich von einer Fernsteuerungseinheit des Stellgliedes unterscheidet, realisiert werden kann.

7. Verfahren zur Reglung einer Anlage (100), die ein erstes (20) und mindestens ein zweites elektrisches Stellglied umfasst, um Elemente (40) zum Schließen, zur Verdunkelung oder für den Sonnenschutz, von motorisierten Hausanlagen (10, 10', 10'', 10''') in Bewegung zu setzen, wobei die elektrischen Stellglieder jeweils ein Regulierungsmittel der Geschwindigkeit des Stellgliedes durch einen Geschwindigkeitssollwert umfassen, **dadurch gekennzeichnet, dass** es einen Schritt zum Durchführen des Verfahrens zur Reglung des ersten Stellgliedes nach einem der vorhergehenden Ansprüche, einen Schritt der Emission von Informationen hinsichtlich des ersten Geschwindigkeitssollwertes, der für das erste Stellglied zu dem mindestens einen zweiten Stellglied eingestellt ist, und einen Schritt zur Bestimmung und zur Registrierung eines Geschwindigkeitssollwertes in jedem des mindestens einen zweiten Stellgliedes durch Verwenden der Informationen umfasst.

8. Verfahren zur Reglung einer Anlage (100), die mehrere elektrische Stellglieder umfasst, um Elemente (40) zum Schließen, zur Verdunkelung oder für den Sonnenschutz, von motorisierten Hausanlagen (10, 10', 10'', 10''') in Bewegung zu setzen, wobei die elektrischen Stellglieder jeweils ein Regulierungsmittel der Geschwindigkeit des Stellgliedes durch einen Geschwindigkeitssollwert umfassen, **dadurch gekennzeichnet, dass** es einen Schritt zum Durchführen des Verfahrens zur Reglung nach einem der Ansprüche 1 bis 6 von mindestens gewissen der elektrischen Stellglieder, einen Schritt der Auswahl eines gemeinsamen Geschwindigkeitssollwertes, einen Schritt der Emission von Informationen hinsichtlich des gemeinsamen Geschwindigkeitssollwertes zu dem mindestens einen Stellglied, und einen Schritt zur Registrierung dieses gemeinsamen Geschwindigkeitssollwertes in jedem Stellglied umfasst.

9. Verfahren zur Reglung nach dem Anspruch 7 oder 8, **dadurch gekennzeichnet, dass** der Schritt zur Emission der Informationen hinsichtlich des ersten Geschwindigkeitssollwertes mit Hilfe spezieller Mittel und/oder mit Hilfe einer besonderen Bedienung einer Fernsteuerungseinheit des Stellgliedes durchgeführt werden kann, oder nur mit Hilfe eines speziellen Werkzeuges durchgeführt werden kann, das sich von der Fernsteuerungseinheit des Stellgliedes unterscheidet.

10. Elektrisches Stellglied (20), um ein Element (40) zum Schließen, zur Verdunkelung oder für den Sonnenschutz, einer motorisierten Hausanlage (10) in Bewegung zu setzen, das ein Mittel (22) zur Regulierung der Geschwindigkeit des Stellgliedes umfasst, **dadurch gekennzeichnet, dass** es Mittel (21, 25, 26) als Hardware und/oder Software zum Durchführen des Verfahrens zur Reglung nach einem der vorhergehenden Ansprüche umfasst.

11. Stellglied nach dem vorhergehenden Anspruch, **dadurch gekennzeichnet, dass** er einen Speicher (26) umfasst, um einen Geschwindigkeitssollwert, ein Registrierungsmittel dieses Wertes in dem Speicher und Mittel zur Berechnung zu enthalten, um diesen Wert zu bestimmen.

12. Stellglied nach dem vorhergehenden Anspruch, **dadurch gekennzeichnet, dass** es ein Emissionsmittel eines Rückmeldesignals umfasst, das Informationen über den ersten Geschwindigkeitssollwert umfasst.

13. Hausanlage (10), die ein Stellglied (20) nach einem der Ansprüche 10 bis 12 umfasst, **dadurch gekennzeichnet, dass** sie einen Sensor umfasst, der in der Lage ist, Mikroverschiebungen zu messen, um eine Endanschlagsdetektierung sicherzustellen oder um eine Detektierungsfunktion eines Hindernisses sicherzustellen, und der in der Lage ist, das Signal zu messen, das in dem Verfahren zur Reglung nach einem der Ansprüche 1 bis 6 verwendet wird.

## Claims

1. Method for setting a first speed of an electric actuator (20) for moving a closure, privacy or solar protection element (40) of a motorised home automation equipment item (10), the electric actuator comprising a means (22) for regulating the first speed of the actuator by a first speed setpoint, comprising a step of adjustment of the first speed setpoint in a limited speed range in the vicinity of a first predetermined target value, this step not affecting a second speed setpoint of the actuator, **characterized in that** the method comprises a step of measurement of a vibratory and/or acoustic signal and **in that** the step of adjustment is performed automatically, by using the measurement of the vibratory and/or acoustic signal.

2. Setting method according to the preceding claim, **characterized in that** the deviation between the first speed setpoint and the first target value is chosen from a list and/or **in that** the speed range is limited such that the maximum deviation between the first speed setpoint and the first target value is lower than 20% of the target value.

3. Setting method according to one of the preceding claims, **characterized in that** the range consists of a finite number of discreet values, for example 6, even 8, even 10, the discreet values being for example uniformly distributed over the range.

4. Setting method according to one of the preceding claims, **characterized in that** it comprises a step of emission of a return signal comprising a first information item relating to the first speed setpoint, notably a return signal of sensory type.

5. Setting method according to Claim 4, **characterized in that** the first information item comprises an indication that a maximum deviation from the first speed setpoint is reached.

6. Setting method according to one of the preceding claims, **characterized in that** it comprises an iteration of the adjustment step, for at least one other speed setpoint target value, notably a second target value relating to the second speed setpoint and/or **in that** the adjustment step can be performed using specific means and/or using a particular manipulation of a remote control unit of the actuator or can be performed only using a specific tool, different from a remote control unit of the actuator.

7. Setting method for an installation (100) comprising a first (20) and at least one second electric actuator for moving closure, privacy or solar protection elements (40) of motorised home automation equipment items (10, 10', 10'', 10'''), the electric actuators each comprising a means for regulating the speed of the actuator by a speed setpoint, **characterized in that** it comprises a step of implementing the setting method for the first actuator according to one of the preceding claims, a step of emission of an information item relating to the first speed setpoint adjusted for the first actuator to the at least one second actuator and a step of determination and of recording of a speed setpoint in each of the at least one second actuator by using the information item.

8. Setting method for an installation (100) comprising several electric actuators for moving closure, privacy or solar protection elements (40) of motorised home automation equipment items (10, 10', 10'', 10'''), the electric actuators each comprising a means for regulating the speed of the actuator by a speed setpoint, **characterized in that** it comprises a step of implementing the setting method according to one of Claims 1 to 6 on at least some of the electric actuators, a step of selection of a common speed setpoint, a step of emission of an information item relating to the common speed setpoint to at least one actuator and a step of recording of this common speed setpoint in each actuator.

9. Setting method according to Claim 7 or 8, **characterized in that** the step of emission of the information item relating to the first speed setpoint can be performed using specific means and/or using a particular manipulation of a remote control unit of the actuator or can be performed only using a specific tool, different from a remote control unit of the actuator.

10. Electric actuator (20) for moving a closure, privacy or solar protection element (40) of a motorised home automation equipment item (10), comprising a means (22) for regulating the speed of the actuator, **characterized in that** it comprises hardware and/or software means (21, 25, 26) for implementing the setting method according to one of the preceding claims.

11. Actuator according to the preceding claim, **characterized in that** it comprises a memory (26) for containing a speed setpoint value, a means for recording this value in memory and computation means for determining this value.

12. Actuator according to the preceding claim, **characterized in that** it comprises a means for emitting a return signal comprising an information item on the first speed setpoint.

13. Home automation equipment item (10) comprising an actuator (20) according to one of Claims 10 to 12, **characterized in that** it comprises a sensor capable of measuring micro-displacements to ensure a detection of end-of-travel at end-stop or to ensure an obstacle detection function and capable of measuring the signal used in the setting method according to Claims 1 to 6.
